# EUROPEAN PATENT SPECIFICATION

(11) **EP 2 116 782 B1**
(45) Date of publication and mention of the grant of the patent: **18.09.2013**
(21) Application number: 09250580.9
(22) Date of filing: 02.03.2009
(51) Int. Cl.: F24F 3/14, F28F 3/12

(54) **Dehumidifier**
Entfeuchter
Déshumidificateur

(30) Priority: 07.05.2008 KR 20080042164
(43) Date of publication of application: 11.11.2009
(73) Proprietor: LG Electronics Inc., Seoul (KR)
(72) Inventor: Park, Hyung Ho, Changwon-si, Kyungsangnam-do 641-110 (KR); Hwang, Soon Chul, Changwon-si, Kyungsangnam-do 641-110 (KR); Park, Joon Sung, Changwon-si, Kyungsangnam-do 641-110 (KR)
(74) Representative: Palmer, Jonathan R.

(56) References cited:
- EP-A1- 1 772 694
- JP-A- 2004 271 029

## Description

### Field of the Invention

The present invention relates to a dehumidifier and, more particularly, to a dehumidifier, which is capable of increasing heat exchange efficiency and improving the flow of fluid within a condensing heat exchanger for cooling reconditioning air by improving the duct of the condensing heat exchanger.

### Background of the Invention

In general, dehumidifiers can be classified according to their operation method as dehumidifiers using a cooling cycle and dehumidifiers using a desiccant rotor.

Dehumidifiers using a cooling cycle are problematic in that a compressor must be provided, and the compressor generates noise and occupies space. Accordingly, dehumidifiers using a desiccant rotor are more common nowadays.

The desiccant rotor has the property of absorbing moisture in the air and dehumidifies while transmitting indoor air therethrough. The desiccant which has absorbed the moisture is reconditioned using hot air.

The air that has been used to recondition the desiccant rotor has high temperature and high humidity and is discharged to the outside. Here a problem arises because the dehumidifier must be placed outside a building or, if placed indoors, an additional exhaust duct must be provided.

In the case where the hot, moist air that has reconditioned the desiccant is circulated within the dehumidifier, there is no need to provide the additional exhaust duct. There is another advantage in that the dehumidifier may be placed at a position desired by a user.

In order to circulate the hot, moist air, the moisture needs to be removed. Accordingly, a condensing heat exchanger for removing the moisture from the hot, moist air is generally provided in a space between an indoor air intake port and the desiccant rotor. That is, the humidity is lowered based on the principle that moisture within the hot, moist air is condensed through heat exchange between the hot, moist air and normal-temperature air.

Accordingly, in order to increase the heat exchange efficiency of the condensing heat exchanger, the shape of a duct within the condensing heat exchanger is very important. Accordingly, a plurality of heat exchange plates is used in order to increase the heat exchange area.

However, the conventional condensing heat exchanger is problematic in that the flow of fluid within the condensing heat exchanger is irregular or heat exchange efficiency is low because an indoor air and heat exchange area is small.

JP 2004-271029 discloses a dehumidifier according to the preamble of claim 1. The dehumidifier of JP 2004-271029 comprises a casing partitioned into a dehumidifying passage and a regenerating passage. A dehumidifying rotor is rotated by a driving means. Indoor air circulation fans suck air in the room and circulate and supply the air into the room. A heat exchanger cools regenerated air circulated inside by the air circulated outside and eliminates moisture.

EP 1772694 discloses a heat exchanger unit of an air conditioning apparatus. The heat exchanger unit has first and second heat exchangers connected together by an opening.

### Summary of the Invention

It is, therefore, an object of the present invention to provide a dehumidifier in which the reconditioning air introduction unit of a condensing heat exchanger has a shape corresponding to a shape of the reconditioning portion of a desiccant, thereby being capable of making uniform the flow of air within a condensing heat exchanger.

Another object of the present invention is to provide a dehumidifier in which the reconditioning air discharge unit of the condensing heat exchanger is placed on the side face of the condensing heat exchanger, thereby being capable of maximizing a heat exchange area of the condensing heat exchanger.

Still another object of the present invention is to provide a dehumidifier in which the reconditioning air ducts of the condensing heat exchanger are differently formed depending on the position of the reconditioning air discharge unit, thereby being capable of making uniform the flow of fluid within the condensing heat exchanger.

To achieve the above objects, a dehumidifier according to an exemplary embodiment of the present invention includes the features of claim 1.

The features of preferred embodiments are defined in the dependent claims.

The details of other embodiments are included in the detailed description and the drawings.

The dehumidifier having the above construction according to the present invention has the following advantages.

First, the reconditioning air introduction unit of the condensing heat exchanger has a shape corresponding to a shape of the reconditioning portion of a desiccant, so reconditioning air introduced into the condensing heat exchanger can uniformly flow within the condensing heat exchanger. Accordingly, there is an advantage in that the dehumidification performance of a dehumidifier can be improved.

Second, the reconditioning air discharge unit of the condensing heat exchanger is placed at a position other than the heat exchange area of the condensing heat exchanger. Accordingly, there are advantages in that a heat exchange area can be maximized and the size of a dehumidifier can be reduced.

Third, the size of the lower space of the condensing heat exchanger is changed, a baffle duct is formed, or the position of the reconditioning air introduction unit is variously changed depending on the position of the reconditioning air discharge unit of the condensing heat exchanger. Accordingly, there is an advantage in that the flow of reconditioning air within the condensing heat exchanger can become smooth.

### Brief Description of the Drawings

The above and other objects, features and advantages of the present invention will become more apparent from the following description of some exemplary embodiments given in conjunction with the accompanying drawings, in which:
Fig. 1 is a perspective view of a dehumidifier according to a first exemplary embodiment; this embodiment is not in accordance with the present invention;
Fig. 2 is an exploded perspective view of major elements of the dehumidifier according to the first exemplary embodiment;
Fig. 3 is a perspective view of a condensing heat exchanger according to a first exemplary embodiment;
Fig. 4 is a rear view of the condensing heat exchanger shown in Fig. 3;
Fig. 5 is a plan cross-sectional view of the condensing heat exchanger shown in Fig. 3;
Fig. 6 is an exploded perspective view of the condensing heat exchanger shown in Fig. 3;
Fig. 7 is a perspective view of a condensing heat exchanger according to a second exemplary embodiment;
Fig. 8 is a plan cross-sectional view of the condensing heat exchanger according to a third exemplary embodiment; this embodiment is in accordance with the present invention;
Fig. 9 is a perspective view of a condensing heat exchanger according to a fourth exemplary embodiment; this embodiment is in accordance with the present invention;
Fig. 10 is a rear view of a condensing heat exchanger according to a fifth exemplary embodiment; this embodiment is in accordance with the present invention; and
Fig. 11 is an exploded perspective view of the condensing heat exchanger according to the fifth exemplary embodiment; this embodiment is in accordance with the present invention.

### Detailed Description of Exemplary Embodiments

Hereinafter, exemplary embodiments of the present invention will be described in detail with reference to the accompanying drawings so that they can be readily implemented by those skilled in the art. In describing the exemplary embodiments of the present invention, the same reference numbers are used throughout the drawings to refer to the same parts, and redundant descriptions thereof are omitted.

### First Exemplary Embodiment

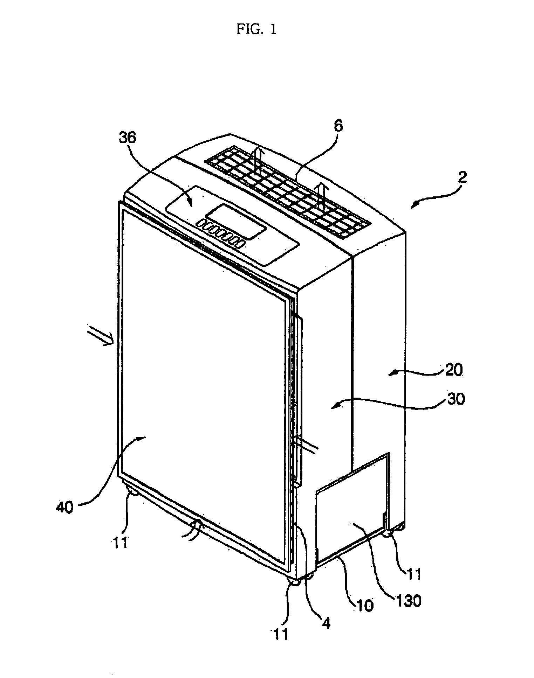

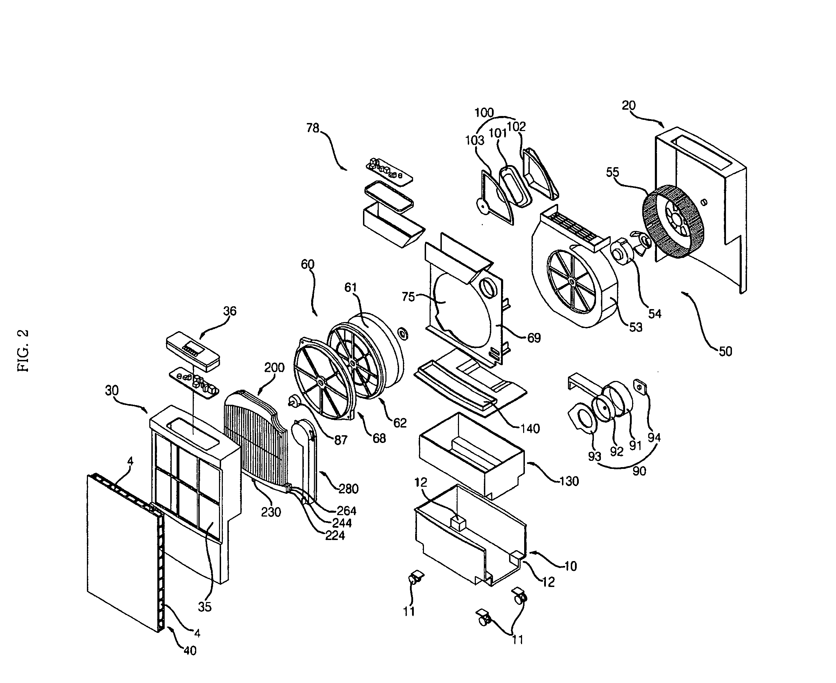

Fig. 1 is a perspective view of a dehumidifier according to a first exemplary embodiment, and Fig. 2 is an exploded perspective view of the major elements of the dehumidifier shown in Fig. 1.

The entire construction of the dehumidifier according to the first exemplary embodiment of the present invention is described below with reference to Figs. 1 and 2.

The dehumidifier according to the present exemplary embodiment, as shown in Fig. 1, is configured to suck in indoor air, to absorb moisture from the indoor air, and to discharge dehumidified indoor air. The dehumidifier includes air intake units 4 and an air discharge unit 6 formed in a main body 2.

The main body 2 includes, as shown in Fig. 2, a base 10, a rear casing 20 coupled to the rear side of the base 10, a front casing 30 placed in front of the rear casing 20, and a front panel 40 coupled to the front casing 30.

The base 10 forms the bottom of the main body 2. Wheel assemblies 11 are placed within the base 10. Each of the wheel assemblies includes a wheel for helping the movement of the dehumidifier and a wheel support to which the wheel is rotatably coupled.

The rear casing 20 is configured to form a rear outward appearance of the dehumidifier. The air discharge unit 6 for discharging indoor air, dehumidified within the main body 2, to the outside of the main body 2 is formed in the rear casing 20.

The front casing 30 is configured to form the front face of the dehumidifier. Air intake holes 35 for sucking in the indoor air into the main body 2 are formed in the front casing 30. Further, a control unit 36, including a control portion for operating and manipulating the dehumidifier and a display unit for displaying the information of the dehumidifier, is placed on the top plate of the front casing 30.

The front panel 40 is configured to form a front outward appearance of the dehumidifier. The air intake units 4 for sucking the indoor air into the main body 2 (in particular, the air intake holes 35 of the front casing 30) are formed in the front panel 40.

That is, the indoor air sequentially passes through the air intake units 4 of the front panel 40 and the air intake holes 35 of the front casing 30 and then enters the main body 2. The indoor air is dehumidified within the main body 2 and is then discharged to the outside through the air discharge unit 6 of the rear casing 20.

Nothing is formed on the front face of the front panel 40 in order to improve the appearance of the dehumidifier, and the air intake units 4 is formed in places other than the front face of the dehumidifier.

A ventilator 50, a dehumidification rotor 60, a reconditioning fan 90, a reconditioning heater 100, and a condensing heat exchanger 200 are placed within the main body 2.

The ventilator 50 sucks in the indoor air through the air intake units 4 and then discharges the indoor air to the air discharge unit 6 via the main body 2. The ventilator 50 includes a fan housing 53, a fan motor 54, and a fan 55.

The rear face of the fan housing 53 is perforated so that the fan housing 53, together with the rear casing 20, form a ventilation duct. Air intake holes are formed in the front face of the fan housing 53. A discharge unit is perforated in the top surface of the fan housing 53. The fan motor 54 may be placed in either the fan housing 53 or the rear casing 20. The fan 55 (hereinafter referred to as a 'dehumidification fan') is coupled to the rotation shaft of the fan motor 54 and is rotated between the fan housing 53 and the rear casing 20.

The dehumidification rotor 60 functions to adsorb moisture in the indoor air sucked in by the ventilator 50 and to recycle the absorbed moisture at low temperature. The dehumidification rotor 60 is placed between the ventilator 50 and the condensing heat exchanger 200.

The dehumidification rotor 60 includes a desiccant 61 and a desiccant wheel 62 to which the desiccant 61 is fixed. The desiccant 61 adsorbs moisture within the indoor air while the indoor air passes through the dehumidification rotor 60 and recycles the absorbed moisture. The desiccant wheel 62 surrounds the circumference of the desiccant 61.

The desiccant 61 is generally configured to have a circular plate and is surrounded by the desiccant wheel 62. A fixing hole for fixing the desiccant 61 to the center of the dehumidification rotor 60 is formed in the desiccant 61.

The desiccant 61 is alternately wound up in a cylindrical shape using paperboard and corrugated paper made of ceramics fiber and may be made of meso-silica (SiO₂), such as nano-carbon balls (NCBs). The NCBs have excellent hygroscopic properties owing to well-developed pores and surface area, and are capable of being reconditioned at a low temperature of about 60°C or less.

NCBs have a spherical carbon structure 200nm to 500nm in diameter that includes a spherical hollow core unit and a mesoporous carbon cell unit. NCBs include fine pores each having a diameter of 2nm to 50nm. The pores of typical activated carbon have a wide surface area (BET), a wide mesoporous area, and do not clog.

The desiccant 61 is partitioned into a portion to which moisture within indoor air is absorbed while the indoor air passes through the desiccant 61 (hereinafter referred to as a 'dehumidification portion'), and a portion from which moisture is evaporated into reconditioning air while the reconditioning air passes through the desiccant 61 (hereinafter referred to as a 'reconditioning portion'). The respective areas alternate by rotation of the desiccant 61 so that moisture is absorbed and evaporated. The reconditioning portion is opposite to the reconditioning heater 100 and is configured to transmit reconditioning air therethrough. Portions other than the reconditioning portion become the dehumidification portion through which the indoor air passes.

The desiccant wheel 62 includes an edge unit configured to have a ring shape and to surround the circumference of the desiccant 61, a fixing unit configured to fix the desiccant 61, and a connection unit configured to connect the edge unit and the fixing unit and radially formed between the edge unit and the fixing unit.

A rotor supporter 68 for rotatably supporting the dehumidification rotor and a rotor frame 69 on which the rotor supporter 68 is mounted are placed within the main body 1.

The rotor frame 69 functions as a kind of barrier for partitioning the inside of the main body 2 into a rear-side space in which the ventilator 50 is placed and a front-side space in which the condensing heat exchanger 200 is placed. A perforation unit 75 through which the rotor supporter 68 perforates is perforated in the rotor frame 69 in front of the air intake holes of the ventilator 50.

The rotor frame 69 has aperture units formed in front of the reconditioning fan 90. The aperture units of the rotor frame 62 function to make a duct 280, allowing air introduced therein to be introduced into the reconditioning fan 90, communicate with the reconditioning fan 90. A control unit 78 for controlling the dehumidifier is placed in the rotor frame 69.

Meanwhile, the dehumidifier according to the present exemplary embodiment further includes a dehumidification rotor motor 87 for rotating the dehumidification rotor 60.

The reconditioning fan 90 functions to ventilate air for reconditioning the dehumidification rotor 60 (hereinafter referred to as 'reconditioning air') to the dehumidification rotor 60. The reconditioning fan 90 includes a fan housing 91, a fan 92 rotatably placed in the fan housing 91, an orifice 93 placed in the fan housing 91 and configured to introduce the air sucked in by the fan 92, and a fan motor 94 placed in the fan housing 91 and configured to rotate the fan 92.

The reconditioning heater 100 functions to heat air ventilated to the dehumidification rotor 60 by the reconditioning fan 90 and to supply the air of a high temperature to the dehumidification rotor 60. The reconditioning heater 100 includes an electric heater 101, a heater cover 102 configured to cover the electric heater 101 and to communicate with the reconditioning fan 90, and a blocking film 103 coupled to the heater cover 102 so that the blocking film 103 is placed between the heater cover 102 and the dehumidification rotor 60.

The blocking film 103 is a kind of air guide for preventing air, heated by the electric heater 101, from leaking to the surroundings between the electric heater 101 and the dehumidification rotor 60 so that the air is moved toward the dehumidification rotor 60. An aperture unit is formed in a face of the blocking film 103, which faces the dehumidification rotor 60.

The condensing heat exchanger 200 functions to condense the reconditioning air that has reconditioned the dehumidification rotor 60 through heat exchange with the indoor air sucked in by the ventilator 50. The condensing heat exchanger 200 includes a plurality of heat exchange plates 220, 240, and 260 which are arranged front and rear in a direction where the indoor air is sucked in.

The condensing heat exchanger 200 include condensing ducts 226, 246, and 256 through which the reconditioning air that has reconditioned the dehumidification rotor 60 passes and heat absorption ducts 232, 253, and 272 through which the indoor air sucked in by the ventilator 50 passes. The condensing heat exchanger 200 is made of synthetic resin material in order to facilitate the shaping of the condensing ducts 226, 246, and 266.

The construction of the condensing heat exchanger 200 is described in detail below.

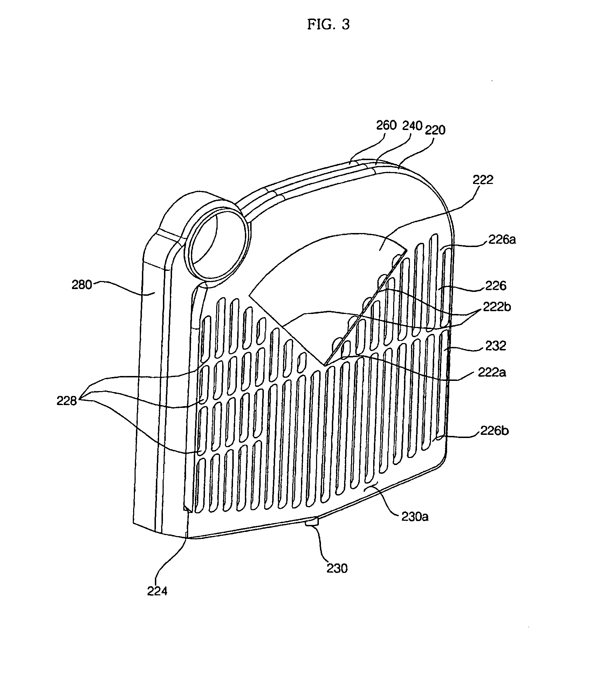

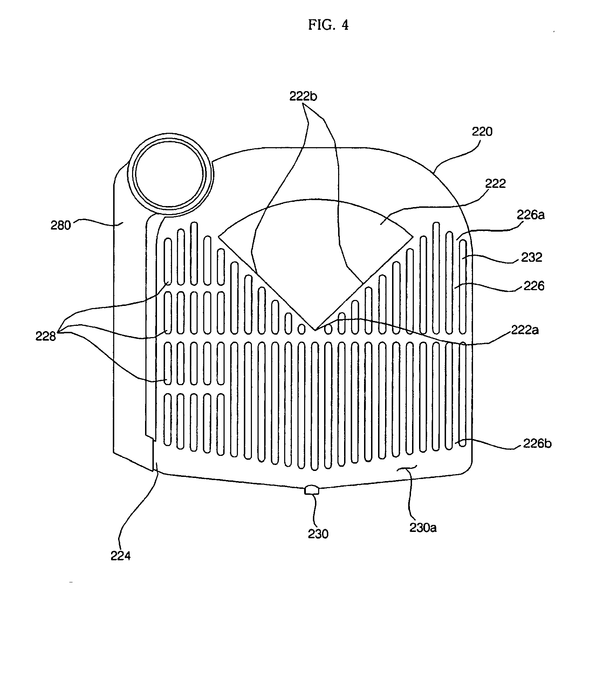

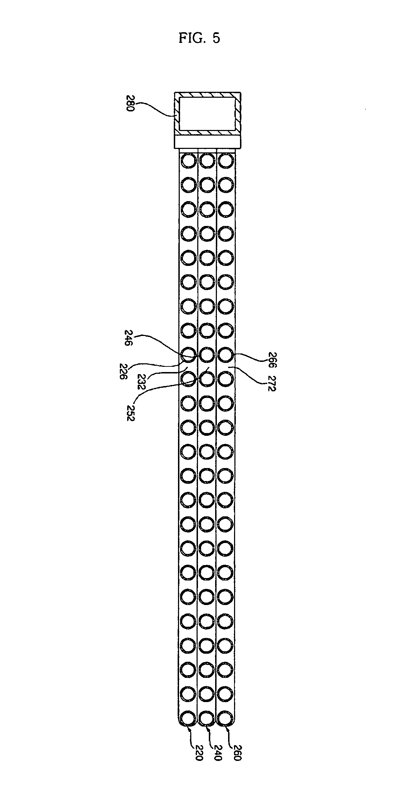

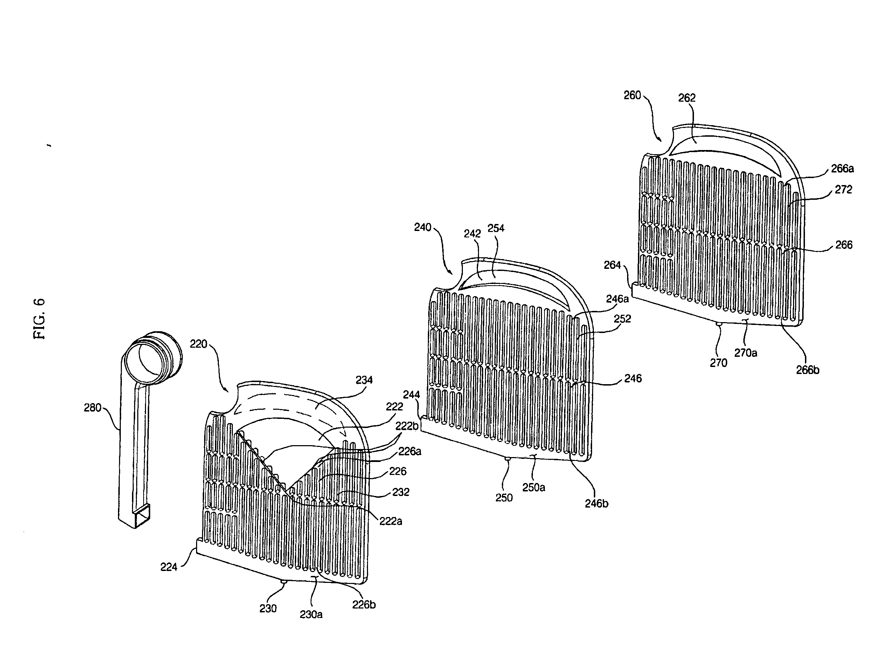

Fig. 3 is a perspective view of the condensing heat exchanger according to a first exemplary embodiment , Fig. 4 is a rear view of the condensing heat exchanger shown in Fig. 3, Fig. 5 is a plan cross-sectional view of the condensing heat exchanger shown in Fig. 3, and Fig. 6 is an exploded perspective view of the condensing heat exchanger shown in Fig. 3.

The construction of the condensing heat exchanger 200 according to the first exemplary embodiment is described with reference to Figs. 3 to 6.

The dehumidifier of the present invention includes the condensing heat exchanger 200 for removing the moisture of reconditioning air. The condensing heat exchanger 200 of the present exemplary embodiment includes the plurality of heat exchange plates 220, 240, and 260 and a duct 280.

Hereinafter, the construction of each of the heat exchange plates 220, 240, and 260 and the duct 280 is described, and a combination of the condensing heat exchanger 200 and the flow of air therein are described.

The heat exchange plates 220, 240, and 260 include a first heat exchange plate 220, a second heat exchange plate 240, and a third heat exchange plate 260. It is however to be noted that the number of heat exchange plates may vary depending on the state of reconditioning air.

The first heat exchange plate 220 includes a first reconditioning air introduction unit 222, a first reconditioning air channel unit 234, a plurality of first condensing ducts 226, a plurality of first heat absorption ducts 232, a first lower space 230a, a first condensed water discharge unit 230, and first reconditioning air discharge units 224.

The first reconditioning air introduction unit 222 is perforated in a face into which the reconditioning air is introduced, which belongs to the first heat exchange plate 220, and is configured to function as an introduction unit for introducing the reconditioning air, passed through the reconditioning portion of the dehumidification rotor 61, into the condensing heat exchanger 200.

In more detail, the first reconditioning air introduction unit 222 has a shape which is opposite to the position of the reconditioning portion of the dehumidification rotor 61 and is configured to have a width increasing in proportion to an increasing distance from the center 222a of the condensing heat exchanger 200. Here, the center 222a of the condensing heat exchanger 200 refers to a position on the condensing heat exchanger 200 corresponding to the center of the desiccant 61.

The dehumidification rotor 60 is configured to generally have a circular shape and is configured to dehumidify the indoor air and to be reconditioned by the reconditioning air while rotating. Therefore, the reconditioning portion in which the reconditioning air reconditions the desiccant 61 has a fan shape, triangular shape, or sector of a circle. Consequently, the reconditioning air introduction unit 222 of the first heat exchange plate 220 has a fan shape in response to the shape of the reconditioning portion, thereby making smooth the suction of reconditioning air. Accordingly, the flow of reconditioning air within the condensing heat exchanger 200 can become uniform, and the condensing efficiency of the reconditioning air can be increased.

Meanwhile, the reconditioning portion of the desiccant 61 may be formed in various positions on the circular desiccant 61. In the present exemplary embodiment, however, it is illustrated that the reconditioning portion is placed in the upper center of the desiccant 61. The first reconditioning air introduction unit 222 is placed in the upper center of the first heat exchange plate 220 based on the reconditioning portion placed in the upper center of the desiccant 61. Accordingly, the reconditioning air introduced through the first reconditioning air introduction unit 222 can be uniformly distributed and flown to the plurality of first condensing ducts 226 to be described later.

The first reconditioning air channel unit 234 is perforated in a face opposite to the face where the first reconditioning air introduction unit 222 is formed, which belongs to the first heat exchange plate 220. The first reconditioning air channel unit 234 is configured to communicate with a second reconditioning air introduction unit 242 to be described later and is configured to discharge a part of the reconditioning air, introduced through the first reconditioning air introduction unit 222, to the second reconditioning air discharge units 244 of the second heat exchange plate 240 to be described later.

The first reconditioning air channel unit 234 may have the same shape as that of the first reconditioning air introduction unit 222 so that it is opposite to the first reconditioning air introduction unit 222. In this case, there is an advantage in that the flow of reconditioning air becomes uniform because the flow of the reconditioning air can be introduced in a straight line. Here, at least one of the shapes of the second reconditioning air introduction unit 242, a second reconditioning air channel unit 254, and a third reconditioning air introduction unit 262 to be described later may have the same shape as that of the first reconditioning air introduction unit 222 so that it is opposite to the first reconditioning air introduction unit 222. Further, each of the first, second, and third reconditioning air introduction units 222, 242, and 262 and the first and second reconditioning air channel units 234 and 254 may have the area which gradually decreases in a direction where reconditioning air proceeds. Accordingly, the flow of reconditioning air can become smooth, and the heat exchange area of reconditioning air and indoor air can be increased.

In the present exemplary embodiment, however, it is illustrated that the first reconditioning air channel unit 234 is configured to have a long streamline shape in the left and right directions based on the shape of the upper edge portion of the first heat exchange plate 220. In other words, the shape and position of the first reconditioning air channel unit 234 correspond to those of the second reconditioning air introduction unit 242 to be described later, so reconditioning air can well flow from the first heat exchange plate 220 to the second heat exchange plate 240.

The plurality of first condensing ducts 226 respectively has a long pipe shape in the length direction and includes inlet units 226a into which reconditioning air is introduced and outlet units 226b from which the reconditioning air is discharged.

Air other than the air flowing through the second heat exchange plate 240, which belongs to the reconditioning air introduced through the first reconditioning air introduction unit 222, flows into the plurality of first condensing ducts 226.

The position of the inlet unit 226a of each of the first condensing ducts 226 may vary depending on the position of the first reconditioning air introduction unit 222. However, in the present exemplary embodiment, the first reconditioning air introduction unit 222 has a fan shape. Therefore, the inlet units 226a are placed on a line extending from the line of a radius 222b having the fan shape. Accordingly, the air introduced through the first reconditioning air introduction unit 222 can smoothly flow downward along the first condensing ducts 226.

Further, the first condensing ducts 226 formed at both ends, which belong to the first condensing ducts 226, are placed on a line that is downward bent on the line of the radius 222b because, if the inlet units 226a are placed on the line of the radius 222b having the fan shape, reconditioning air may not well enter the inlet units 226a. Accordingly, the line where the inlet units 226a are placed generally has an M shape.

Meanwhile, baffle ducts 228 may be formed between the first condensing ducts 226. Plural columns of the first condensing ducts 226 are placed in parallel on a plane in the upper and down directions.

In the case where the first reconditioning air discharge units 224 are placed in the right and left circumferential portions of the lower end of the first heat exchange plate 220, there is a difference in the distance between the plurality of first condensing ducts 226 and the first reconditioning air discharge units 224. Accordingly, there occurs a difference in the distance of flow until the reconditioning air introduced into the first reconditioning air introduction unit 222 passes through the plurality of first condensing ducts 226 and is then discharged through the first reconditioning air discharge units 224. In this case, there occurs imbalance in the flow of the entire reconditioning air flowing through the first heat exchange plate 220.

Thus, if the baffle ducts 228, making the first reconditioning air discharge units 224 communicate with the first condensing ducts close to the first reconditioning air discharge units 224, are formed, the velocity of reconditioning air flowing through the first condensing ducts close to the first reconditioning air discharge units 224 can be lowered. Accordingly, the flow of the entire reconditioning air flowing through the first heat exchange plate can become uniform.

The baffle ducts 228 may be formed in various ways. In the present exemplary embodiment, however, it is illustrated that baffle ducts, connecting all the first condensing ducts 226 while passing through the center 222a of the first heat exchange plate, and a pair of baffle ducts, connecting a part of the first condensing ducts 226 on the upper and lower sides of the above-described baffle duct, are formed.

In the case where the reconditioning air discharge units 224 are placed in the right and left circumferential portions of the lower end of the first heat exchange plate 220, the above-described imbalance occurs in the flow. Accordingly, a mesh plate in which a plurality of holes through which reconditioning air can flow is perforated may be placed in inlet units placed on the line of the radius 222b of the fan shape close to the reconditioning air discharge units 224, which belong to the inlet units 226a. In this case, the velocity of reconditioning air introduced into the inlet units 226a close to the reconditioning air discharge units 224 becomes slow, and the velocity of the flow of reconditioning air on the plurality of first condensing ducts can become uniform.

The respective outlet units 226b are formed under the first condensing ducts 226. The air passed through the first condensing ducts 226 is discharged through the plurality of outlet units 226b. The outlet units 226b may be arranged in various shapes. That is, the outlet units 226b may be arranged in a straight line or may be arranged on an upward inclined line on the basis of the first condensed water discharge unit 230 to be described later.

The plurality of condensing ducts is configured to have an embossing shape. Accordingly, there is an advantage in that the heat exchange area of indoor air and reconditioning air is widened

The plurality of first heat absorption ducts 232 are formed between the plurality of first condensing ducts 226. In other words, the first condensing ducts 226 are perforated in the front and rear directions between the first condensing ducts 226 such that the indoor air can flow between the first heat absorption ducts 232. Accordingly, the indoor air can be subject to heat exchange with high-temperature and high-humidity reconditioning air, passed through the first heat absorption ducts 232, while the indoor air passes through the first condensing ducts 226. Moisture within the reconditioning air is condensed through the heat exchange between the high-temperature and high-humidity reconditioning air and the indoor air of normal temperature.

The first lower space 230a is formed between the plurality of outlet units 226b and the first reconditioning air discharge units 224. The first lower space 230a functions to accommodate the air passed through the plurality of outlet units 226b and to discharge the accommodated air through the first reconditioning air discharge units 224.

Meanwhile, the first condensed water discharge unit 230 in which the moisture condensed in the first condensing ducts 226 drops down to the first lower space 230a and is then discharged to the outside is formed in the first lower space 230a.

The bottom of the first lower space 230a is upward inclined on the basis of the first condensed water discharge unit 230. Accordingly, the condensed water can be easily discharged to the first condensed water discharge unit 230.

The first reconditioning air discharge units 224 function as exits from which the air passed through the first lower space 230a is discharged to the outside. The first reconditioning air discharge units 224 are formed on one side of the circumferential portion of the first heat exchange plate 220. Accordingly, the thickness of the entire condensing heat exchanger 200 can be reduced, and the outward appearance of the dehumidifier can be made thin.

In the present exemplary embodiment, the first reconditioning air discharge units 224 are formed in the left and right circumferential portions of the lower end of the first heat exchange plate 200.

The second heat exchange plate 240 is placed in the rear of the first heat exchange plate 220 in a direction where the reconditioning air is introduced such that the reconditioning air passed through the first heat exchange plate 220 can pass through the second heat exchange plate 240.

The entire construction and functions of the second heat exchange plate 240 are similar to those of the first heat exchange plate 220. Hereinafter, differences between the second heat exchange plate 240 and the first heat exchange plate 220 are for the most part described.

The second heat exchange plate 240 has the same construction as that of the first heat exchange plate 220 except for the second reconditioning air introduction unit 242 and the second condensing ducts 246.

The second reconditioning air introduction unit 242 is perforated in a face in which the reconditioning air is introduced into the second heat exchange plate 240 and is configured to communicate with the first reconditioning air channel unit 234. Accordingly, the second reconditioning air introduction unit 242 functions as an inlet into which a part of the reconditioning air introduced into the first heat exchange plate 220 is introduced.

As described above, a plurality of condensing ducts is formed under the area occupied by a reconditioning air introduction unit and is configured to introduce the flow of reconditioning air up and down. Accordingly, in the case where the area of the reconditioning air introduction unit is wide, the area of the condensing ducts is inevitably small and, therefore, the heat exchange efficiency of the entire condensing heat exchanger is lowered.

Therefore, the second reconditioning air introduction unit 242 according to the present exemplary embodiment has a long streamline shape right and left based on the shape of the upper circumferential portion of the second heat exchange plate 240, unlike in the first reconditioning air introduction unit 222. In other words, the second reconditioning air introduction unit 242 has the same shape as that of the first reconditioning air channel unit 234 and communicates with the first reconditioning air channel unit 234. Accordingly, there is an advantage in that the heat exchange area of indoor air and reconditioning air is widened because the area occupied by the second condensing ducts 246 to be described later is increased.

In the case where the second reconditioning air discharge units 244 to be described later are placed on the right and left circumferential portions of the lower end of the second heat exchange plate 240, there may occur imbalance in the flow of reconditioning air flowing through the above-described second heat exchange plate 240. Therefore, the area formed by the second reconditioning air introduction unit 242 may be wide as the second reconditioning air introduction unit 242 becomes far from the second reconditioning air discharge units 244. Accordingly, the flow of the reconditioning air flowing through the second heat exchange plate 240 can become uniform.

Each of the plurality of second condensing ducts 246 has a long pipe shape in the length direction. An inlet unit 246a into which the reconditioning air is introduced and an outlet unit 246b from which the reconditioning air is discharged are formed in each of the plurality of second condensing ducts 246.

The plurality of second condensing ducts 246 functions to perform heat exchange on reconditioning air other than the reconditioning air flowing into the third heat exchange plate 260, which belongs to the reconditioning air introduced through the second reconditioning air introduction unit 242.

The position of the inlet unit 246a of each of the second condensing ducts 246 may vary depending on the position of the second reconditioning air introduction unit 242. In the present exemplary embodiment, however, that, as described above, the second reconditioning air introduction unit 242 has a long streamline shape in the right and left directions. The inlet units 246a are placed on the line equal to the lower end of the streamline shape.

In this case, the area occupied by the second condensing ducts 246 is greater than that occupied by the first condensing ducts 226. Accordingly, the heat exchange area of the second heat exchange plate 240 is greater than that of the first heat exchange plate 220.

Meanwhile, the baffle ducts 228 may also be formed in the second condensing ducts 246, as in the first condensing ducts 226. The outlet units 246b have the same construction and position as those of the outlet units 226b.

The third heat exchange plate 260 is placed in the rear of the second heat exchange plate 240 in a direction where reconditioning air is introduced such that a part of the reconditioning air passed through the second reconditioning air introduction unit 242 can be introduced into the third heat exchange plate 260. The entire construction and functions of the third heat exchange plate 260 are similar to those of the second heat exchange plate 240.

The entire construction of the third heat exchange plate 260 is identical to that of the second heat exchange plate 240 except that the second reconditioning air channel unit 254 is not formed in the third heat exchange plate 260. In more detail, reconditioning air, which has been introduced into the third heat exchange plate 260 through the second reconditioning air channel unit 254 without being subject to heat exchange in the second heat exchange plate 240, is all subject to heat exchange in the third heat exchange plate 260. Accordingly, a third reconditioning air channel unit placed at a position corresponding to the third reconditioning air introduction unit 262 is not formed in the third heat exchange plate 260. The reconditioning air introduced through the third reconditioning air introduction unit 262 is all introduced into a plurality of third condensing ducts 266.

The remaining elements have the same construction as those of the second heat exchange plate 240.

The duct 280 functions to force the air, discharged through the reconditioning air discharge units 224, 244, and 264, to flow into the reconditioning fan 90. Accordingly, the duct 280 may have a pipe that connects the reconditioning air discharge units 224, 244, and 264 and the reconditioning fan 90. The duct 280 may have a variety of shapes and constructions depending on the positions of the reconditioning air discharge units 224, 244, and 264 and the reconditioning fan 90.

In more detail, in the present exemplary embodiment, the duct 280 includes inlet units enough to accommodate all the reconditioning air discharge units 224, 244, and 264, and the respective inlet units are fit into the reconditioning air discharge units 224, 244, and 264. The duct 280 is lengthily formed up and down in parallel to the circumferential portion of the right or left side of the condensing heat exchanger.

Alternatively, the duct 280 may be formed to adjoin the circumferential portion of the right or left side of the condensing heat exchanger 200. However, in the present exemplary embodiment, the ducts formed in the condensing heat exchangers are spaced apart one another at regular intervals. Accordingly, the respective heat absorption ducts 232, 252, and 272 are formed between the ducts and the outermost condensing duct forming the circumferential portion of the condensing heat exchanger 200, which belongs to the plurality of condensing ducts 226, 246, and 266.

A process of condensing reconditioning air and a process of dehumidifying indoor air in the dehumidifier constructed above according to the first exemplary embodiment of the present invention are described below.

First, reconditioning air circulates through a reconditioning passage when the reconditioning fan 90 is rotated. That is, the reconditioning air passing through the reconditioning fan 90 is heated by the reconditioning heater 100, thereby making the air have a high temperature. The high-temperature reconditioning air reconditions the reconditioning portion of the dehumidification rotor 60 and then enters the first reconditioning air introduction unit 222 of the condensing heat exchanger 200.

A part of the reconditioning air introduced into the first reconditioning air introduction unit 222 is introduced into the first condensing ducts 226, and the remaining is introduced into the second reconditioning air introduction unit 242 through the first reconditioning air channel unit 234. A part of the reconditioning air introduced into the second reconditioning air introduction unit 242 is introduced into the second condensing ducts 246 and the remaining is introduced into the third condensing ducts 266 via the second reconditioning air channel unit 254 and the third reconditioning air introduction unit 262.

The reconditioning air introduced into the first condensing ducts 226, the second condensing ducts 246, and the third condensing ducts 266 downward flows along each of the condensing ducts 226, 246, and 266 and is then subject to heat exchange with the indoor air of each of the heat absorption ducts 232, 252, and 272 crossing the respective condensing ducts 226, 246, and 256.

Moisture within the reconditioning air is condensed during the heat exchange process, and the condensed moisture is introduced into a drain fan 140 through the condensing ducts 226, 246, and 256 and the condensed water discharge units 230, 250, and 270 formed in the respective lower spaces.

The reconditioning air passed through each of the condensing ducts 226, 246, and 256 is introduced into the duct 280 through each of the reconditioning air discharge units 224, 244, and 264 via the respective lower spaces 230a, 250a, and 270a. The reconditioning air is introduced into the reconditioning fan 90 coupled to the duct 280. The reconditioning air introduced into the reconditioning fan 90 passes through the reconditioning heater 100 and then circulates again while reconditioning the reconditioning portion of the dehumidification rotor 60.

Indoor air is sucked in by the air intake units 4 of the main body 2 when the ventilator 50 is rotated. The indoor air is subject to heat exchange with the reconditioning air while passing through the heat absorption ducts 232, 252, and 272 of the condensing heat exchanger 200.

Moisture included in the indoor air is absorbed while the indoor air passes through the dehumidification portion of the desiccant 61. The indoor air from which the moisture has been removed passes through the ventilator 50 and is then discharged to the interior of a room through the air discharge unit 6.

### Second Exemplary Embodiment

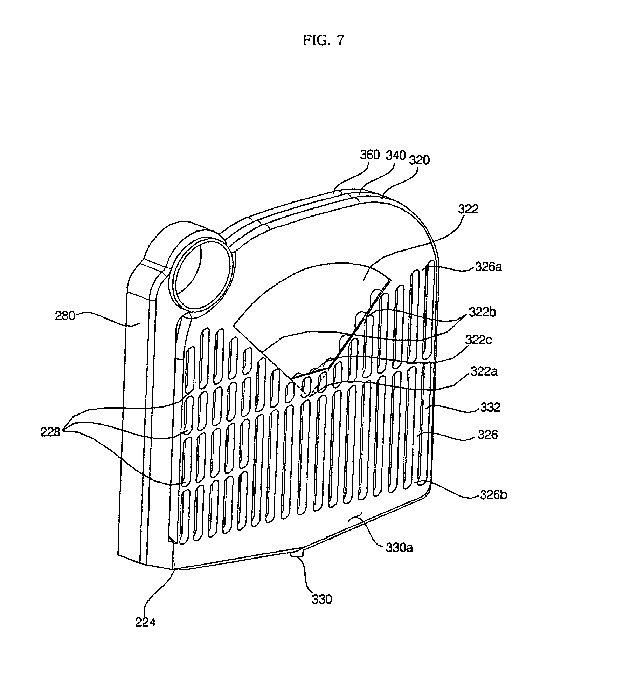

Fig. 7 is a perspective view of a condensing heat exchanger according to a second exemplary embodiment.

The entire construction of the condensing heat exchanger according to the second exemplary embodiment is described below with reference to Fig. 7. The entire construction of the second exemplary embodiment is similar to that of the first exemplary embodiment. Differences between the second exemplary embodiment and the first exemplary embodiment are chiefly described.

The first reconditioning air introduction unit 322 of a first heat exchange plate 320 according to the second exemplary embodiment has a shielded portion, ranging from the center 322a of the condensing heat exchanger to an upward portion of the center 322a at a specific interval. A dehumidification rotor 60 has a rotation unit at its center. In this case, reconditioning air cannot be introduced into the first reconditioning air introduction units 322 through a portion where the rotation unit of the dehumidification rotor 60 is placed. Accordingly, the portion where the rotation unit of the dehumidification rotor is placed, which belongs to the first reconditioning air introduction units 322, is shielded. The area where the reconditioning air is subject to heat exchange with indoor air can be increased by raising the height of each of first condensing ducts 326 of the shielded portion. In more detail, inlet units 326a of the first condensing ducts 326 are placed on a shielding line 322c of the shielded portion.

Meanwhile, the lower end of each of condensing ducts 326, 346, and 366 has a straight line. Lower spaces 330a, 350a, and 370a are formed at the respective lower ends of the condensing ducts 326, 346, and 366 and the heat exchange plates 320, 340, and 360. In the present exemplary embodiment, the flow of the reconditioning air becomes smooth by increasing the lower spaces 330a, 350a, and 370a on positions where respective reconditioning air discharge units 224, 244, and 264 are placed. In more detail, the sides where the lower spaces 330a, 350a, and 370a are wide have a low pressure, so the velocity of the reconditioning air on the condensing ducts is relatively decreased. The sides where the lower spaces 330a, 350a, and 370a are narrows have a high pressure, so the velocity of the reconditioning air on the condensing ducts is fast. Accordingly, the flow of velocity becomes uniform depending on the distance from the reconditioning air discharge units 324, 344, and 364, thereby making smooth the flow of the reconditioning air.

### Third Exemplary Embodiment

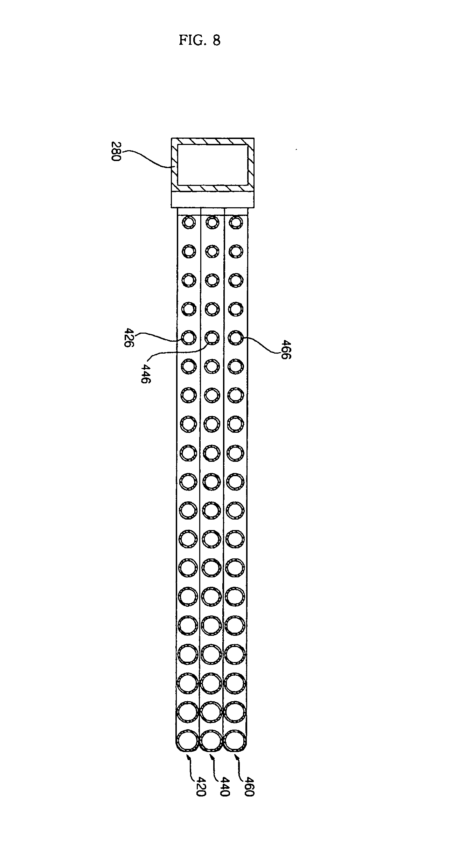

Fig. 8 is a plan cross-sectional view of the condensing heat exchanger according to a third exemplary embodiment; this embodiment is in accordance with the present invention.

The entire construction of the condensing heat exchanger according to the third exemplary embodiment of the present invention is described below with reference to Fig. 8. The entire construction of the third exemplary embodiment of the present invention is similar to that of the first exemplary embodiment. Differences between the third exemplary embodiment and the first exemplary embodiment are for the most part described.

In the case where each of the reconditioning air discharge units 224, 244, and 264 is placed on one of the right and lefts sides of the condensing heat exchanger, there may be imbalance in the flow of air flowing through the condensing ducts. In more detail, reconditioning air, passed through condensing ducts 426, 446, and 466 placed close to the respective reconditioning air discharge units 224, 244, and 264, is rapidly discharged to the reconditioning air discharge units 224, 244, and 264. Regenerated air, passed through the condensing ducts 426, 446, and 466 placed far from the respective reconditioning air discharge units 224, 244, and 264, is relatively slowly discharged to the reconditioning air discharge units 224, 244, and 264. Accordingly, there occurs imbalance in the flow of air between the condensing ducts 426, 446, and 466.

In the present exemplary embodiment, the cross area of each of the condensing ducts 426, 446, and 466 may be increased in proportion to the distance from each of the reconditioning air discharge units 224, 244, and 264. In this case, a great amount of air flows into the condensing ducts 426, 446, and 466 placed far from the respective reconditioning air discharge units 224, 244, and 264, and a small amount of air flows into the condensing ducts 426, 446, and 466 placed close to the respective reconditioning air discharge units 224, 244, and 264. Accordingly, the entire flow of air can be balanced.

### Fourth Exemplary Embodiment

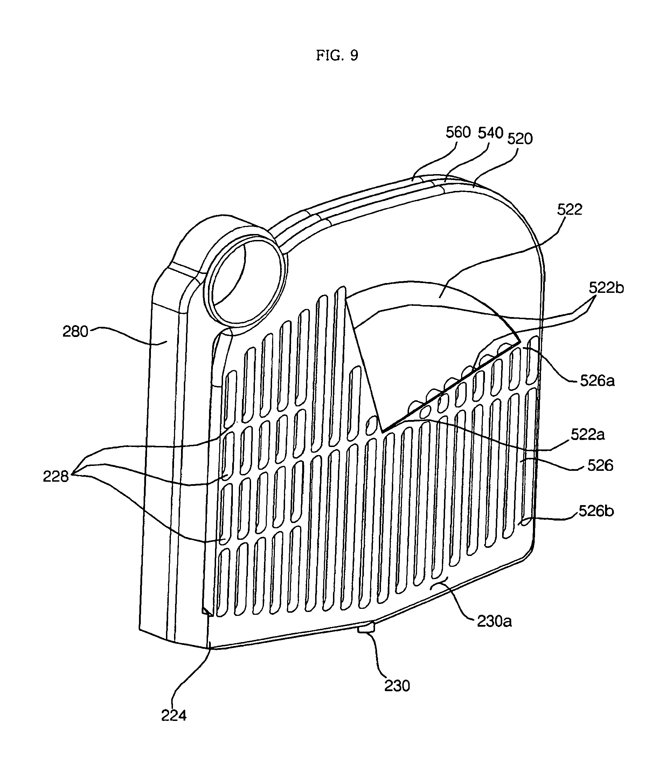

Fig. 9 is a perspective view of a condensing heat exchanger according to a fourth exemplary embodiment; this embodiment is in accordance with the present invention.

The entire construction of the condensing heat exchanger according to the fourth exemplary embodiment of the present invention is described below with reference to Fig. 9. The entire construction of the fourth exemplary embodiment of the present invention is similar to that of the first exemplary embodiment. Differences between the fourth exemplary embodiment and the first exemplary embodiment are chiefly described.

A first reconditioning air introduction unit 522 according to the fourth exemplary embodiment of the present invention is rotated in an opposite direction to the first reconditioning air discharge units 224 at a specific angle. Accordingly, imbalance occurring in the flow in the case where the first reconditioning air discharge units 224 are placed on one of the right and left sides of a first heat exchange plate 520 as described above can be solved.

In more detail, according to the present exemplary embodiment, the difference in the distance between the plurality of inlet units 526a of respective condensing ducts 526 and the first reconditioning discharge units 224 can be reduced. In this case, a distance where reconditioning air introduced into the condensing ducts 526 through the first reconditioning air introduction unit 522 passes through the reconditioning air discharge units 224 is constant. Accordingly, the flow of the reconditioning air of the first heat exchange plate 520 can become smooth.

### Fifth Exemplary Embodiment

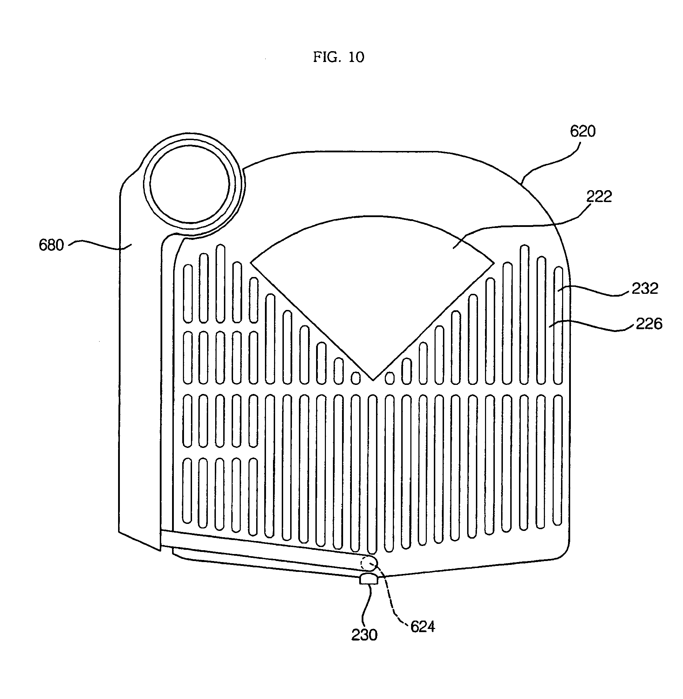

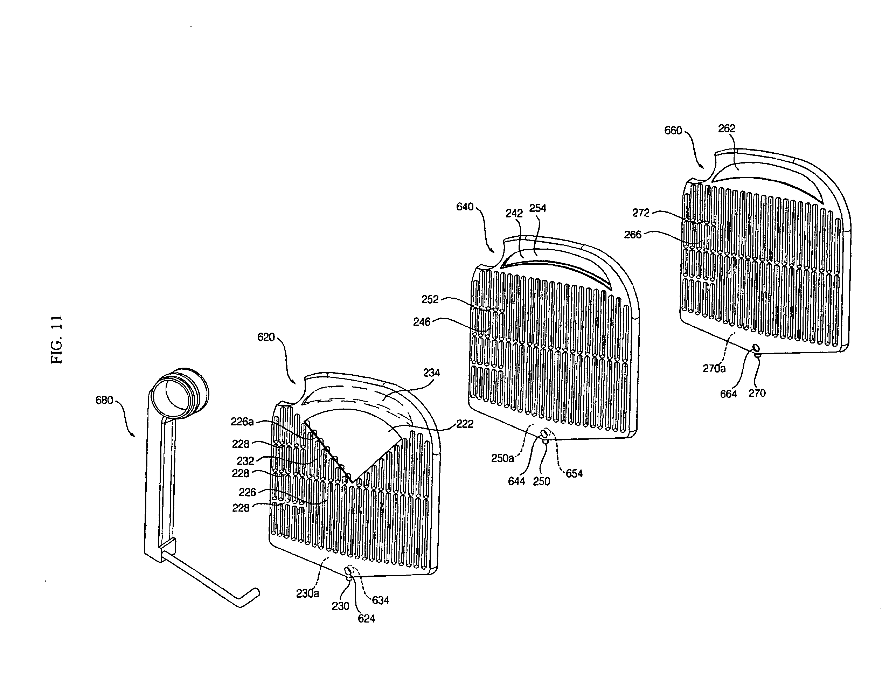

Fig. 10 is a rear view of a condensing heat exchanger according to a fifth exemplary embodiment; this embodiment is in accordance with the present invention, and Fig. 11 is an exploded perspective view of the condensing heat exchanger according to the fifth exemplary embodiment of the present invention.

In the dehumidifier according to the present exemplary embodiment, as shown in Figs. 10 and 11, the first, second, and third reconditioning air introduction units 622, 642, and 662 of first, second, and third heat exchange plates 620, 640, and 660 are formed on the upper parts of the first, second, and third heat exchange plates 620, 640, and 660, and first, second, and third reconditioning air discharge units 624, 644, and 664 of the first, second, and third heat exchange plates 620, 640, and 660 are perforated in the lower parts of the first, second, and third heat exchange plates 620, 640, and 660 (in particular, in a direction where air flows).

In other words, the first, second, and third reconditioning air discharge units 624, 644, and 664 of the first, second, and third heat exchange plates 620, 640, and 660 are perforated at the lower parts of the rear faces of the first, second, and third heat exchange plates 620, 640, and 660.

A first discharging reconditioning air channel unit 634 and a second discharging reconditioning air channel unit 654 are respectively perforated in such a way as to be opposite to the second and third reconditioning air discharge units 644 and 664 on the respective front faces of the first heat exchange plate 620 and the second heat exchange plate 640.

The first discharging reconditioning air channel unit 634 communicates with the second discharging reconditioning air discharge unit 644, and the second reconditioning air channel unit 654 communicates with the third reconditioning air discharge unit 664.

In other words, reconditioning air passed through the third condensing ducts 266 is introduced into a duct 680 via the third discharging reconditioning air discharge unit 664, the second reconditioning air channel unit 654, the second reconditioning air discharge unit 644, the first discharging reconditioning air channel unit 634, and the first reconditioning air discharge unit 624.

Further, reconditioning air passed through the second condensing ducts 246 is introduced into the duct 680 via the second reconditioning air discharge unit 644, the first reconditioning air channel unit 634, and the first reconditioning air discharge unit 624.

Further, reconditioning air passed through the first condensing ducts 226 is introduced into the duct 680 via the first reconditioning air discharge unit 624.

Meanwhile, the duct 680 is formed so that it communicates with the first reconditioning air discharge unit 624. In more detail, the duct 680 is coupled to the first reconditioning air discharge unit 624 so that it is inserted into the first reconditioning air discharge unit 624 forward and backward. The duct 680 is bent in response to the lower part and left and right circumferential portions of the first heat exchange plate 620.

## Claims

1. A dehumidifier, comprising
a main body (2), comprising a dehumidification passage in which indoor air is sucked in and the sucked-in indoor air is dehumidified and a reconditioning passage in which reconditioning air circulates;
a dehumidification rotor (60), comprising a dehumidification portion arranged to dehumidify the indoor air and a reconditioning portion arranged to be reconditioned using the reconditioning air; and
a condensing heat exchanger (200), comprising a reconditioning air introduction unit (222) into which the reconditioning air is introduced and reconditioning air discharge units (224, 244, 264) from which the reconditioning air is discharged,
wherein the reconditioning air introduction unit (222) of the condensing heat exchanger (200) has a width which, at a position opposite to the reconditioning portion, increases according to a distance from a center of the condensing heat exchanger corresponding to a center of the dehumidification rotor, and
wherein the condensing heat exchanger (200) comprises:
a plurality of condensing ducts (426, 446, 466) in which the reconditioning air introduced into the reconditioning air introduction unit moves downwards;
heat absorption ducts (232) configured to cross the plurality of condensing ducts, wherein the indoor air sucked in the main body moves from a front to a rear direction within the heat absorption ducts; **characterized in that**
the reconditioning air discharge units (224, 244, 264) are formed on one side of a circumferential portion of the condensing heat exchanger, and the cross area of each of the condensing ducts (426, 446, 466) is increased in proportion to the distance from the reconditioning air discharge units (224, 244, 264), whereby in use, a great amount of air flows into the condensing ducts (426, 446, 466) placed far from the respective reconditioning air discharge units (224, 244, 264), and a small amount of air flows into the condensing ducts (426, 446, 466) placed close to the respective reconditioning discharge units (224, 244, 264).

2. The dehumidifier of claim 1, wherein the reconditioning air introduction unit (222) has a fan shape corresponding to a shape of the reconditioning portion.

3. The dehumidifier of claim 2, wherein:
the reconditioning air discharge units (224, 244, 264) are placed in circumferential portions of the left lower end of the condensing heat exchanger, and
the fan shape of the reconditioning air introduction unit (222) is inclined at a specific angle toward a side far from the reconditioning air discharge units (224, 244, 264).

4. The dehumidifier of claim 1, wherein the plurality of condensing ducts (426, 446, 466) are configured to have an embossing shape.

5. The dehumidifier of claim 1, wherein baffle ducts (228) for allowing the condensing ducts to communicate with each other are formed in condensing ducts close to the reconditioning air discharge units (224, 244, 264), which belong to the plurality of condensing ducts.

6. The dehumidifier of claim 1, wherein:
the reconditioning air introduction unit (222) has a fan shape corresponding to a shape of the reconditioning portion,
an inlet unit (226a) into which the reconditioning air is introduced is formed in each of the plurality of condensing ducts (426, 446, 466), and
a plurality of the inlet units is placed on a line where a pair of radii of the reconditioning air introduction unit (222) having the fan shape extends.

7. The dehumidifier of claim 6, wherein a mesh plate is formed in a plurality of the inlet units placed on a radius close to the reconditioning air discharge units (224, 244, 264) which belongs to the pair of radii of the reconditioning air introduction units (224, 244, 264).

8. The dehumidifier of claim 6, wherein:
the reconditioning portion is placed at a center of an upper part of the
dehumidification rotor (60), and
inlet units placed at ends of both sides of the condensing heat exchanger (200), which belong to the plurality of inlet units placed on the line where the pair of radii extends, are placed on a line which is downward bent on the line where the pair of radii extends.

9. The dehumidifier of claim 6, wherein:
the reconditioning air introduction unit (222) having the fan shape has a shape in which a portion spaced apart from an apex of the fan shape at a specific interval is shielded, and
inlet units placed at the shielded portion, which belong to the plurality of inlet units, are placed on the shielded line.

10. The dehumidifier of claim 1, wherein:
the plurality of condensing ducts (426, 446, 466) comprises a plurality of respective outlet units
(226b), and a space (330a, 350a, 370a) through which the reconditioning air discharged from each of the outlet units passes is formed under the plurality of outlet units (226a).

11. The dehumidifier of claim 10, wherein:
a condensed water discharge unit (230) through which condensed water is discharged is formed in the space (330a, 350a, 370a), and
the space (330a, 350a, 370a) has a shape which is upward inclined in the condensed water discharge unit (230).

12. The dehumidifier of claim 10, wherein:
the reconditioning air discharge units (224, 244, 264) are placed in circumferential portions of the left lower end of the condensing heat exchanger (200), and
the space (330a, 350a, 370a) has a size decreasing according to an increasing distance from the reconditioning air discharge units (224, 244, 264).

## Patentansprüche

1. Entfeuchter, welcher aufweist:
einen Hauptkörper (2), der einen Entfeuchtungskanal, in den Innenluft angesaugt wird und die angesaugte Innenluft befeuchtet wird, sowie einen Auffrischungskanal, in dem Auffrischungsluft zirkuliert, aufweist;
einen Entfeuchtungsrotor (60), der einen Entfeuchtungsabschnitt, der zum Entfeuchten der Innenluft angeordnet ist, sowie einen Auffrischungsabschnitt, der zur Auffrischung mittels der aufgefrischten Luft angeordnet ist, aufweist; und
einen Kondensationswärmetauscher (200), der eine Auffrischungslufteinführeinheit (222), in die die Auffrischungsluft eingeführt wird, und
Auffrischungsluftausgabeeinheiten (224, 244, 264), aus denen die Auffrischungsluft abgegeben wird, aufweist,
worin die Auffrischungslufteinführeinheit (222) des Kondensationswärmetauschers (200) eine Breite hat, die, an einer dem Auffrischungsabschnitt gegenüberliegenden Position, gemäß einem Abstand von einer Mitte des Kondensationswärmetauschers entsprechend einer Mitte des Entfeuchtungsrotors zunimmt, und
worin der Kondensationswärmetauscher (200) aufweist:
eine Mehrzahl von Kondensierleitungen (426, 446, 466), in denen sich die in die Auffrischungslufteinführeinheit eingeführte Auffrischungsluft abwärts bewegt;
Wärmeabsorptionsleitungen (232), die konfiguriert sind, um die Mehrzahl von Kondensierleitungen zu queren, worin sich die in den Hauptkörper gesaugte Innenluft in Richtung von vorne nach hinten innerhalb der Wärmeabsorptionsleitungen bewegt;
**dadurch gekennzeichnet, dass** die Auffrischungsluftausgabeeinheiten (224, 244, 264) an einer Seite eines Umfangsabschnitts des Kondensationswärmetauschers ausgebildet sind; und
die Querschnittsfläche von jeder der Kondensierleitungen (426, 446, 466) proportional zum Abstand von den Auffrischungsluftausgabeeinheiten (224, 244, 264) zunimmt, wodurch im Gebrauch eine große Luftmenge in die Kondensierleitungen (426, 446, 466) fließt, die von den jeweiligen Auffrischungsluftausgabeeinheiten (224, 244, 264) entfernt angeordnet sind, und eine kleine Luftmenge in die Kondensierleitungen (426, 446, 466) fließt, die in der Nähe der jeweiligen Auffrischungsausgabeeinheiten (224, 244, 264) angeordnet sind.

2. Der Entfeuchter von Anspruch 1, worin die Auffrischungslufteinführeinheit (222) eine Fächerform aufweist, die einer Form des Auffrischungsabschnitts entspricht.

3. Der Entfeuchter von Anspruch 2, worin:
die Auffrischungsluftausgabeeinheiten (224, 244, 264) in Umfangsabschnitten des verbleibenden unteren Endes des Kondensationswärmetauschers angeordnet sind, und
die Fächerform der Auffrischungslufteinführeinheit (222) mit einem bestimmten Winkel zu einer von den Auffrischungsluftausgabeeinheiten (224, 244, 264) entfernten Seite hin geneigt ist.

4. Der Entfeuchter von Anspruch 1, worin die Mehrzahl von Kondensierleitungen (426, 446, 466) mit einer eingeprägten Form konfiguriert sind.

5. Der Entfeuchter von Anspruch 1, worin Ablenkleitungen (228), um eine Kommunikation der Kondensierleitungen miteinander zu erlauben, in Kondensierleitungen in der Nähe der Auffrischungsluftausgabeeinheiten (224, 244, 264) ausgebildet sind, welche zu der Mehrzahl von Kondensierleitungen gehören.

6. Der Entfeuchter von Anspruch 1, worin:
die Auffrischungslufteinführeinheit (222) eine Fächerform hat, die einer Form des Auffrischungsabschnitts entspricht,
eine Einlasseinheit (226a), in die die Auffrischungsluft eingeführt wird,
in jeder der Mehrzahl von Kondensierleitungen (426, 446, 466) ausgebildet ist, und
eine Mehrzahl der Einlasseinheiten auf einer Linie angeordnet ist, wo sich ein Paar von Radien der die Fächerform aufweisenden der Auffrischungslufteinführeinheit (222) erstreckt.

7. Der Entfeuchter von Anspruch 6, worin eine Gitterplatte in einer Mehrzahl der Einlasseinheiten ausgebildet ist, die auf einem Radius in der Nähe der Auffrischungsluftausgabeeinheiten (224, 244, 264) angeordnet sind, welcher zu dem Paar von Radien der Auffrischungslufteinführeinheiten (224, 244, 264) gehört.

8. Der Entfeuchter von Anspruch 6, worin:
der Auffrischungsabschnitt in der Mitte eines oberen Teils des Entfeuchtungsrotors (60) angeordnet ist, und
Einlasseinheiten, die an Enden beider Seiten des Kondensationswärmetauschers (200) angeordnet sind, die zu der Mehrzahl von Einlasseinheiten gehören, die auf der Linie angeordnet sind, wo sich das Paar von Radien erstreckt, auf einer Linie angeordnet sind, die auf der Linie,
wo sich das Paar von Radien erstreckt, abwärts gebogen ist.

9. Der Entfeuchter von Anspruch 6, worin:
die Auffrischungslufteinführeinheit (222), die die Fächerform hat, eine Form hat, in dem ein Abschnitt mit Abstand von einem Scheitel der Fächerform an einem bestimmten Intervall abgeschirmt ist, und
Einlasseinheiten, die an dem abgeschirmten Abschnitt angeordnet sind,
die zu der Mehrzahl von Einlasseinheiten gehören, auf der abgeschirmten Linie angeordnet sind.

10. Der Entfeuchter von Anspruch 1, worin:
die Mehrzahl von Kondensierleitungen (426, 446, 466) eine Mehrzahl von jeweiligen Auslasseinheiten (226b) aufweist, und
ein Zwischenraum (330a, 350a, 370a), durch den die von jeder der Auslasseinheiten abgegebenene Auffrischungsluft hindurchtritt, unter der Mehrzahl von Auslasseinheiten (226a) ausgebildet ist.

11. Der Entfeuchter von Anspruch 10, worin:
eine Kondenswasserausgabeeinheit (230), durch die Kondenswasser ausgegeben wird, in dem Zwischenraum (330a, 350a, 370a) ausgebildet ist, und
der Zwischenraum (330a, 350a, 370a) eine Form hat, die in der Kondenswasserausgabeeinheit (230) aufwärts geneigt ist.

12. Der Entfeuchter von Anspruch 10, worin:
die Auffrischungsluftausgabeeinheiten (224, 244, 264) in Umfangsabschnitten des verbleibenden unteren Endes des Kondenswärmetauschers (200) angeordnet sind, und
der Zwischenraum (330a, 350a, 370a) eine Größe hat, die gemäß einem zunehmendem Abstand von den Auffrischungsluftausgabeeinheiten (224, 244, 264) abnimmt.

## Revendications

1. Déshumidificateur, comprenant
un corps principal (2), comprenant un passage de déshumidification dans lequel de l'air intérieur est aspiré et l'air intérieur aspiré est déshumidifié et un passage de reconditionnement dans lequel l'air de reconditionnement circule ;
un rotor de déshumidification (60), comprenant une partie de déshumidification agencée pour déshumidifier l'air intérieur et une partie de reconditionnement agencée pour être reconditionnée en utilisant l'air de reconditionnement ; et
un échangeur de chaleur à condensation (200), comprenant une unité d'introduction d'air de reconditionnement (222) dans laquelle l'air de reconditionnement est introduit et des unités de décharge d'air de reconditionnement (224, 244, 264) à partir desquelles l'air de reconditionnement est déchargé,
dans lequel l'unité d'introduction d'air de reconditionnement (222) de l'échangeur de chaleur à condensation (200) a une largeur qui, à une position opposée à la partie de reconditionnement, augmente en fonction d'une distance à partir d'un centre de l'échangeur de chaleur à condensation correspondant à un centre du rotor de déshumidification, et
dans lequel l'échangeur de chaleur à condensation (200) comprend :
une pluralité de conduits de condensation (426, 446, 466) dans lesquels l'air de reconditionnement introduit dans l'unité d'introduction d'air de reconditionnement se déplace vers le bas ;
des conduits d'absorption de chaleur (232) configurés pour traverser la pluralité de conduits de condensation, où l'air intérieur aspiré dans le corps principal se déplace d'une direction avant à une direction arrière à l'intérieur des conduits d'absorption de chaleur ;
**caractérisé en ce que**
les unités de décharge d'air de reconditionnement (224, 244, 264,) sont formées sur un côté d'une partie circonférentielle de l'échangeur de chaleur à condensation, et la surface transversale de chacun des conduits de condensation (426, 446, 466) augmente proportionnellement à la distance à partir des unités de décharge d'air de reconditionnement (224, 244, 264), moyennant quoi en cours d'utilisation, une quantité importante d'air circule dans les conduits de condensation (426, 446, 466) placés loin des unités de décharge d'air de reconditionnement respectives (224, 244, 264), et une faible quantité d'air circule dans les conduits de condensation (426, 446, 466) placés à proximité des unités de décharge de reconditionnement respectives (224, 244, 264).

2. Déshumidificateur de la revendication 1, dans lequel l'unité d'introduction d'air de reconditionnement (222) a une forme d'éventail correspondant à une forme de la partie de reconditionnement.

3. Déshumidificateur de la revendication 2, dans lequel :
les unités de décharge d'air de reconditionnement (224, 244, 264) sont placées dans des parties circonférentielles de l'extrémité inférieure gauche de l'échangeur de chaleur à condensation, et
la forme d'éventail de l'unité d'introduction d'air de reconditionnement (222) est inclinée à un angle spécifique vers un côté éloigné des unités de décharge d'air de reconditionnement (224, 244, 264).

4. Déshumidificateur de la revendication 1, dans lequel la pluralité de conduits de condensation (426, 446, 466) sont configurés pour avoir une forme de gaufrage.

5. Déshumidificateur de la revendication 1, dans lequel des conduits déflecteurs (228), pour permettre aux conduits de condensation de communiquer les uns avec les autres, sont formés dans des conduits de condensation à proximité des unités de décharge d'air de reconditionnement (224, 244, 264), qui appartiennent à la pluralité de conduits de condensation.

6. Déshumidificateur de la revendication 1, dans lequel :
l'unité d'introduction d'air de reconditionnement (222) a une forme d'éventail correspondant à une forme de la partie de reconditionnement,
une unité d'entrée (226a), dans laquelle l'air de reconditionnement est introduit, est formée dans chacun de la pluralité de conduits de condensation (426, 446, 466) ; et
une pluralité des unités d'entrée est placée sur une ligne où une paire de rayons de l'unité d'introduction d'air de reconditionnement (222) ayant la forme d'éventail s'étend.

7. Déshumidificateur de la revendication 6, dans lequel une plaque maillée est formée dans une pluralité des unités d'entrée placées sur un rayon proche de l'unité de décharge d'air de reconditionnement (224, 244, 264), qui appartient à la paire de rayons des unités d'introduction d'air de reconditionnement (224, 244, 264).

8. Déshumidificateur de la revendication 6, dans lequel :
la partie de reconditionnement est placée au centre d'une partie supérieure du rotor de déshumidification (60), et
des unités d'entrée placées au niveau des extrémités des deux côtés de l'échangeur de chaleur à condensation (200), qui appartiennent à la pluralité d'unités d'entrée placées sur la ligne où la paire de rayons s'étend, sont placées sur une ligne qui est courbée vers le bas sur la ligne où la paire de rayons s'étend.

9. Déshumidificateur de la revendication 6, dans lequel :
l'unité d'introduction d'air de reconditionnement (222) ayant la forme d'éventail a une forme dans laquelle une partie espacée d'un sommet de la forme d'éventail à un intervalle spécifique est protégée, et
des unités d'entrée placées au niveau de la partie protégée, qui appartiennent à la pluralité d'unités d'entrée, sont placées sur la ligne protégée.

10. Déshumidificateur de la revendication 1, dans lequel :
la pluralité de conduits de condensation (426, 446, 466) comprend une pluralité d'unités de sortie respectives (226b), et un espace (330a, 350a, 370a), à travers lequel l'air de reconditionnement déchargé à partir de chacune des unités de sortie passe, est formé sous la pluralité d'unités de sortie (226a).

11. Déshumidificateur de la revendication 10, dans lequel :
une unité de décharge d'eau condensée (230), à travers laquelle l'eau condensée est déchargée, est formée dans l'espace (330a, 350a, 370a), et
l'espace (330a, 350a, 370a) a une forme qui est inclinée vers le haut dans l'unité de décharge d'eau condensée (230).

12. Déshumidificateur de la revendication 10, dans lequel :
les unités de décharge d'air de reconditionnement (224, 244, 264) sont placées dans des parties circonférentielles de l'extrémité inférieure gauche de l'échangeur de chaleur à condensation (200) ; et
l'espace (330a, 350a, 370a) a une dimension décroissante en fonction d'une distance croissante à partir des unités de décharge d'air de reconditionnement (224, 244, 264).
